# EUROPEAN PATENT SPECIFICATION

(11) **EP 4 133 354 B1**
(45) Date of publication and mention of the grant of the patent: **04.06.2025**
(21) Application number: 20718620.6
(22) Date of filing: 07.04.2020
(51) Int. Cl.: H01M 50/20, G06F 1/26, H02J 7/00, H01M 50/502, H02J 7/36, H02M 3/07

(54) **SECONDARY BATTERY PACK, CHARGER AND DISCHARGER**
SEKUNDÄRBATTERIEPACK, LADEGERÄT UND ENTLADER
BLOC-BATTERIE SECONDAIRE, CHARGEUR ET DÉCHARGEUR

(43) Date of publication of application: 15.02.2023
(73) Proprietor: AC Biode S.a r.l., 5809 Hesperange (LU)
(72) Inventor: MIZUSAWA, Atsushi, 5809 Hesperange (LU)
(74) Representative: Algemeen Octrooi- en Merkenbureau B.V.
(86) International application number: PCT/EP2020/059895
(87) International publication number: WO 2021/204364

(56) References cited:
- EP-A1- 3 364 487
- JP-A- 2016 171 075

## Description

### TECHNICAL FIELD

The present invention relates to a secondary battery pack and a secondary battery module.

### BACKGROUND ART

Batteries are a type of device for utilizing, as electric energy, chemical energy which results from a chemical reaction between a positive active material and negative active material through an electrolyte. Batteries are roughly divided into primary and secondary batteries. The primary battery is, so to speak, a single-use battery that cannot be recharged once it has been discharged, whereas the secondary battery is a type of battery that can be repeatedly charged and discharged. Due to such a nature, the secondary battery is also called the storage battery.

Secondary batteries are used in various applications. For example, they are used as a power source for small-sized consumer appliances, such as a handheld information terminal, mobile electronics, portable music player or digital camera, or as a battery for an electric bicycle, hybrid electric vehicle, or drone. They are also used as a storage battery device to be embedded in a power generator which uses natural energy (renewable energy), such as solar generation or wind-power generation (Patent Literature 1 or 2).

The charging of a secondary battery is performed by setting the secondary battery in a charger which is connected, for example, to a commercial AC power supply. The charger has a power conditioner (converter) configured to convert alternating current into direct current. The device converts the alternating current from the commercial AC power supply into direct current, and passes the resulting current between the positive electrode and negative electrode of the secondary battery.

On the other hand, small-sized consumer appliances, electric vehicles and other aforementioned types of products are normally driven by alternating current. Therefore, in order to drive such AC-driven equipment by the direct current released from a secondary battery, it is necessary to convert direct current into alternating current by means of a power conditioner (inverter) or similar device.

In summary, a two-stage power conversion including AC-to-DC power conversion and DC-to-AC power conversion is needed in order to supply AC-driven equipment with electric power if a conventional and common type of secondary battery is used. The power conversion efficiency from DC to AC through an inverter as well as the power conversion efficiency from AC to DC through a converter are each within a range from 80 % to 90 %. It cannot reach 100 %. Accordingly, there is the problem that a power loss associated with the power conversion is present, which lowers the power utilization efficiency.

With respect to this problem, Patent Literature 3 discloses a new secondary battery capable of the charging and discharging of the alternating current and alternating power. This secondary battery has three electrodes, i.e. the positive electrode and negative electrode as well as a bipolar electrode located between the positive and negative electrodes, having an intermediate electrode potential between the positive and negative electrodes.

### CITATION LIST

### PATENT LITERATURE

Patent Literature 1: JP 2012-221670 A
Patent Literature 2: JP 2013-069431 A
Patent Literature 3: JP 2016-171075 A

### SUMMARY OF INVENTION

### TECHNICAL PROBLEM

When the secondary battery described in Patent Literature 3 is charged or discharged, the battery is alternately switched between the state in which the positive terminal and bipolar terminal are connected to a pair of output ends of a commercial AC power supply or a pair of input ends of a load, and the state in which the negative terminal and bipolar terminal are connected to the pair of output or input ends. Consequently, cations alternately move between the positive and bipolar electrodes as well as between the bipolar and negative electrodes. During the period in which cations are moving between the positive and bipolar electrodes, electrons flow between the positive and bipolar electrodes through an external circuit. During the period in which cations are moving between the bipolar and negative electrode, electrons flow between the bipolar and negative electrodes through an external circuit. Since the direction of the flow of the electrons is inverted for each period, the charging and discharging of the alternating current is possible.

For the previously described charging and discharging operation, it is necessary that the electrons which have come from the positive or negative electrode to the bipolar electrode should subsequently be made to flow toward the negative or positive electrode of the same battery. In other words, the charging and discharging of the alternating current cannot be achieved if the electrons which have come from the positive or negative electrode to the bipolar electrode in one secondary battery are subsequently made to flow to the negative or positive electrode of another secondary battery. This means that two or more secondary batteries having previously described configuration cannot be serially connected for use, which prevents the previously described secondary battery from being used as a high-voltage power source.

The problem to be solved by the present invention is to create a secondary battery which allows for the charging and discharging of the alternating current as well as one which produces high voltage.

### SOLUTION TO PROBLEM

The first aspect of the present invention developed for solving the previously described problem is a secondary battery pack including:
a first battery and a second battery each of which includes a positive terminal and a negative terminal;
a third battery including a positive terminal, a negative terminal and a bipolar terminal;
a first connector configured to electrically connect the negative terminal of the first battery and the positive terminal of the third battery; and
a second connector configured to electrically connect the positive terminal of the second battery and the negative terminal of the third battery,
where the third battery includes the following elements, with n being an integer equal to or greater than zero:
(n+1) positive electrodes and (n+1) negative electrodes alternately arranged;
(2n+1) bipolar electrodes individually located in the spaces between the positive electrodes and the negative electrodes neighboring each other;
an electrolyte;
a positive-electrode connection member configured to electrically connect the positive terminal of the third battery and the (n+1) positive electrodes;
a negative-electrode connection member configured to electrically connect the negative terminal of the third battery and the (n+1) negative electrodes; and
a bipolar-electrode connection member configured to electrically connect the bipolar terminal of the third battery and each of the (2n+1) bipolar electrodes.

The second aspect of the present invention developed for solving the previously described problem is a secondary battery pack including:
a first battery and a second battery each of which includes a positive terminal and a negative terminal;
a third battery including a positive terminal, a negative terminal and a bipolar terminal;
a first connector configured to electrically connect the negative terminal of the first battery and the positive terminal of the third battery; and
a second connector configured to electrically connect the positive terminal of the second battery and the negative terminal of the third battery,
where the third battery includes the following elements, with n being an integer equal to or greater than zero:
either (n+2) positive electrodes and (n+1) negative electrodes alternately arranged, or (n+2) negative electrodes and (n+1) positive electrodes alternately arranged;
(2n+2) bipolar electrodes individually located in the spaces between the positive electrodes and the negative electrodes neighboring each other;
an electrolyte;
a positive-electrode connection member configured to electrically connect the positive terminal of the third battery and the (n+2) or (n+1) positive electrodes;
a negative-electrode connection member configured to electrically connect the negative terminal of the third battery and the (n+1) or (n+2) negative electrodes; and
a bipolar-electrode connection member configured to electrically connect the bipolar terminal of the third battery and the (2n+2) bipolar electrodes.

In the secondary battery pack according to the first or second aspect of the present invention, the third battery having the positive and negative electrodes as well as the bipolar electrodes arranged between the positive and negative electrodes enables the charging and discharging of alternating current. The serial connection of the third electrode to the first battery as well as to the second battery enables the production of high voltage.

The third battery has positive, bipolar and negative electrodes (which may hereinafter be simply called the "electrodes" when no discrimination is made between the positive, bipolar and negative electrodes) arranged in a predetermined order in the electrolyte, with a separator sandwiched between the neighboring electrodes. Being "arranged in order" does not necessarily mean that the electrodes are linearly arranged; it includes various arrangements, such as a U-shaped, V-shaped or zigzag form. It is also possible to prepare each of the positive, negative and bipolar electrodes in the form of a sheet electrode, and to join the electrodes together in a laminated form with a separator sandwiched between the neighboring electrodes.

In any of the previously described secondary battery packs, commercially available secondary batteries may be used as the first and second batteries. In that case, a plurality of secondary battery cells may be connected in series or in parallel and used as the first or second battery. Connecting a plurality of secondary battery cells in series enables the first and second batteries to produce high voltage. Connecting a plurality of secondary battery cells in parallel provides the first and second batteries with a high amount of capacity. Accordingly, a plurality of secondary battery cells connected in series, or those connected in parallel, can be used as the first battery and/or second battery depending on the purpose of use of the secondary battery pack.

Let Ec denote the electrode potential of the positive electrodes of the third battery, Ea denote the electrode potential of the negative electrodes, and Eb denote the electrode potential of the bipolar electrodes ("Biodes"). The three potentials satisfy the relationship expressed as Ec>Eb>Ea. Such a relationship in potential level reflects the capacity of each electrode to give or receive electrons. The active materials for the positive, negative and bipolar electrodes, the material for the current collector, as well as the electrolyte should be selected to satisfy the aforementioned relational expression. As far as the aforementioned relational expression is satisfied, the secondary battery pack according to the first or second aspect of the present invention can be applied in any type of secondary battery, such as a nickel-hydride secondary battery, nickel-cadmium secondary battery, lead-acid secondary battery, lithium ion secondary battery, or sodium ion secondary battery.

The electrode potential of the positive electrodes of the first and second batteries only needs to be higher than the electrode potential Ea of the negative electrodes of the third battery, while it is insignificant whether the electrode potential in question is higher or lower than the electrode potential Ec of the positive electrodes of the third battery. Similarly, the electrode potential of the negative electrodes of the first and second batteries only needs to be lower than the electrode potential Ec of the positive electrodes of the third battery, while it is insignificant whether the electrode potential in question is higher or lower than the electrode potential Ea of the negative electrodes of the third battery.

Examples of the active material for the positive electrodes of the first, second and third batteries include, but not limited to, the compounds represented by the following chemical formulae: LiCoPO₄, LiNiPO₄, LiNiVO₄, LiMn_{3/2}Ni_{1/2}O₄, LiCoPO₄, LiPtO₃, LiCrMnO₄, LiMn₂O₄, LiMnPO₄, LiNi_{1/3}Mn_{1/3}Co_{1/3}O₂, LiNi_{1/2}Mn_{1/2}O₂, LiNi_{4/5}Co_{1/5}O₂, LiCoVO₄, LiCoO₂, LINiO₂, LiFe₂(SO₄)₂, LIFePO₄, Li₁₊ₓ(Fe_{2/5}Mn_{2/5}Ti_{1/5})₁₋ₓO₂, Li₂FeSiO₄, and Li₂MnSiO₄.

Examples of the active material for the negative electrodes of the first, second and third batteries include, but not limited to, the materials represented by the following names: lithium metal, lithium alloy, graphite, graphene (two-dimensional graphite sheet), hard carbon, soft carbon, crystal(line) silicon, amorphous silicon, silica (silicon dioxide), silicene (two-dimensional silicon sheet), tin metal, and tin alloy.

For example, when the secondary battery pack according to the first or second aspect of the present invention is applied in a lithium ion secondary battery, LiFePO₄ can be used as the active material of the positive electrodes, a carbon-based material as the active material of the negative electrodes, and Li_{4/3}Ti_{5/3}O₄ as the active material of the bipolar electrodes.

When such a secondary battery pack is charged, one of the two output terminals of an AC power source is selectively connected to either the positive terminal of the first battery or the negative terminal of the second battery, while the other output terminal is connected to the bipolar terminal of the third battery. When the former output terminal of the AC power source is connected to the positive terminal of the first battery, electrons flow from the positive terminal of the first battery toward the bipolar terminal (bipolar electrode) of the third battery through an external circuit, causing the oxidization of the active material of the positive electrode in the first battery. The resulting cations (positive ions, Li⁺) move toward the negative electrode, to be eventually reduced to C₆Li. Meanwhile, the active material of the positive electrode in the third battery undergoes oxidization, and the resulting cations move toward the bipolar electrode.

The former output terminal of the AC power source is subsequently connected to the negative terminal of the second battery. Then, electrons flow from the bipolar terminal of the third battery toward the negative terminal of the second battery through the external circuit, and cations move from the bipolar electrode toward the negative electrode in the third battery, to be eventually reduced to C₆Li. Meanwhile, the active material of the positive electrode in the second battery undergoes oxidization, and the resulting cations (positive ions, Li⁺) move toward the negative electrode, to be eventually reduced to C₆Li.

The chemical reactions which respectively occur at the electrodes in the first, second and third batteries in the charging process are expressed by the following formulae (1) and (2):
Cathode :

   LiFe^{(III)}PO₄ → Fe^{(III)}PO₄ + Li⁺ + e⁻ (1)
Biode :

   Li[Li_{1/3}Ti^{(IV)}_{5/3}]O₄ + Li⁺ + e⁻ → Li₂[Li_{1/3}Ti^{(III)}_{3/3}Ti^{(IV)}_{2/3}]O₄
**Biode** :

   Li₂[Li_{1/3}Ti^{(III)}_{3/3} Ti^{(IV)}_{2/3}]O₄ → Li[Li_{1/3}Ti^{(IV)}_{5/3}]O₄ + Li⁺ + e⁻ **(2)**
Anode :

   6C + Li⁺ + e⁻ → C₆Li

Thus, the secondary battery pack according to the first or second aspect of the present invention is charged through the two-stage chemical reactions. The flow of the electrons occurs in the opposite direction in each stage. Accordingly, the battery pack can be charged with the alternating current by alternately connecting the bipolar terminal of the third battery to either the positive terminal of the first battery or the negative terminal of the second battery according to the direction of the alternating current taken from the AC power supply.

In the discharging process, the chemical reactions at the electrodes in the first, second and third batteries occur in the direction opposite to the charging process. Initially, the active material of the negative electrode in the second battery undergoes oxidization. The resulting cations (positive ions, Li⁺) move toward the positive electrode, to be eventually reduced to LiFePO₄. Meanwhile, the active material of the negative electrode in the third battery undergoes oxidization, and the resulting cations (positive ions, Li⁺) move toward the bipolar electrode. During this process, electrons flow from the negative terminal of the second battery toward the bipolar electrode of the third battery through the external circuit. Subsequently, the cations move from the bipolar electrode toward the positive electrode in the positive electrode, to be eventually reduced to LiFePO₄. Meanwhile, the active material of the negative electrode in the first battery undergoes oxidization, and the resulting cations (positive ions, Li⁺) move toward the positive electrode, to be eventually reduced to LiFePO₄. During this process, electrons flow from the bipolar terminal of the third battery toward the positive terminal of the first battery through the external circuit. Accordingly, alternating current can be released by switching the electrode to be connected to the bipolar electrode between the negative terminal of the second battery and the positive terminal of the first battery at appropriate timings.

The secondary battery pack according to the first or second aspect of the present invention does not only allow for the charging and discharging of the alternating current but can also be modified to allow for the charging and discharging of the direct current by providing a switching circuit at each of the positive and negative sides of a direct-current battery and operating the switching circuits in such a manner as to switch the battery pack at appropriate timings between the state in which the positive terminal of the first battery and the bipolar terminal of the third battery are respectively connected to the positive electrode and the negative electrode of the direct-current battery, and the state in which the bipolar terminal of the third battery and the negative terminal of the second battery are respectively connected to the positive electrode and the negative electrode of the direct-current battery.

The previously described secondary battery packs can be charged and discharged by the following device.

That is to say, a charger configured to charge one of the previously described secondary battery packs includes:
first and second input lines to be connected to a pair of output ends of an AC power supply;
a positive-electrode terminal and a negative-electrode terminal located on the first input line and configured to be connected to the positive terminal of the first battery and the negative terminal of the second battery of the secondary battery pack, respectively;
a bipolar-electrode terminal located on the second input line and configured to be connected to the bipolar terminal of the third battery of the secondary battery pack;
a switching means located between the first input line and the positive-electrode terminal as well as between the first input line and the negative-electrode terminal, and configured to switch between a first connection state in which the first input line is connected to the positive-electrode terminal and a second connection state in which the first input line is connected to the negative-electrode terminal; and
a controller configured to control the switching means based on the frequency of the AC power supply.

A discharger configured to discharge one of the previously described secondary battery packs includes:
first and second output lines to be connected to a pair of input terminals of a load;
a positive-electrode terminal and a negative-electrode terminal located on the first output line and configured to be connected to the positive terminal of the first battery and the negative terminal of the second battery of the secondary battery pack, respectively;
a bipolar-electrode terminal located on the second output line and configured to be connected to the bipolar terminal of the third battery of the secondary battery pack;
a switching means located between the first output line and the positive-electrode terminal as well as between the first output line and the negative-electrode terminal, and configured to switch between a first connection state in which the first output line is connected to the positive-electrode terminal and a second connection state in which the first output line is connected to the negative-electrode terminal; and
a controller configured to control the switching means.

As for the switching means, for example, a bipolar transistor can be used.

Yet another aspect of the present invention is a secondary battery module including:
one of the previously described secondary battery packs;
first and second input/output lines;
a positive-electrode terminal and a negative-electrode terminal located on the first input/output line and configured to be connected to the positive terminal of the first battery and the negative terminal of the secondary battery pack, respectively;
a bipolar-electrode terminal located on the second input/output line and configured to be connected to the bipolar terminal of the third battery of the secondary battery pack;
a switching means located between the first input/output line and the positive-electrode terminal as well as between the first input/output line and the negative-electrode terminal, and configured to switch between the state in which the first input/output line is connected to the positive-electrode terminal and the state in which the first input/output line is connected to the negative-electrode terminal; and
a controller configured to control the switching means.

### ADVANTAGEOUS EFFECTS OF INVENTION

In the secondary battery pack according to the present invention, the third battery having the positive, negative and bipolar electrodes enables the charging of the AC power from an AC power supply without the help of a power conditioner, as well as the discharging of the AC power without the help of a power conditioner. Furthermore, the serial connection of the first battery and the second battery, which are common types of secondary batteries, to the third battery enables the secondary battery pack to produce high voltage.

### BRIEF DESCRIPTION OF DRAWINGS

Fig. 1 is a schematic configuration diagram of the first embodiment of the secondary battery pack according to the present invention.
Fig. 2A is an illustration of the charging operation by the reaction in the first stage of the secondary battery pack shown in Fig. 1.
Fig. 2B is an illustration of the charging operation by the reaction in the second stage of the secondary battery pack shown in Fig. 1.
Fig. 3A is an illustration of the discharging operation by the reaction in the first stage of the secondary battery pack shown in Fig. 1.
Fig. 3B is an illustration of the discharging operation by the reaction in the second stage of the secondary battery pack shown in Fig. 1.
Fig. 4A is a diagram showing one example of the voltage value at each section of the secondary battery pack in the first embodiment.
Fig. 4B is a diagram showing another example of the voltage value at each section of the secondary battery pack in the first embodiment.
Fig. 5 is a schematic configuration diagram of the second embodiment of the secondary battery pack according to the present invention.
Fig. 6 is a schematic configuration diagram of an embodiment of the secondary battery module according to the present invention.
Fig. 7 is a schematic configuration diagram of a high-voltage generator using a secondary battery pack according to the present invention.
Fig. 8 is a diagram showing an example of the arrangement of the positive electrodes, bipolar electrodes and negative electrodes of the third battery.

### DESCRIPTION OF EMBODIMENTS

Embodiments of the secondary battery according to the present invention are hereinafter described.

### [First Embodiment]

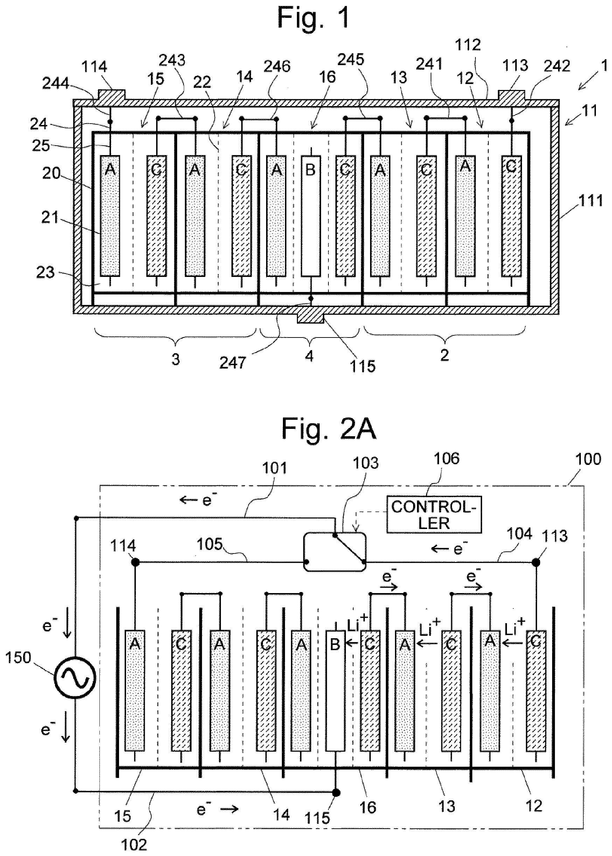

Fig. 1 is a schematic configuration diagram of a secondary battery pack according to the first embodiment of the present invention. The secondary battery pack 1 includes a case 11 as well as a first battery 2, second battery 3 and third battery 4 contained in the case 11. The first battery 2 includes two secondary battery cells 12 and 13. The second battery 3 also includes two secondary battery cells 14 and 15, while the third battery 4 includes one secondary battery cell 16. The five secondary battery cells 12-16 each include a closed container 20 as well as a plurality of electrodes 21, separators 22 and an electrolyte 23 which are contained in the closed container 20. The closed container 20 is provided with external terminals 24 electrically connected through connection members 25 to the electrodes 21 contained in the closed container 20.

The case 11 includes, for example, a metallic case body 111 having an upper opening sealed with a metallic cover 112. The cover 112 has a positive terminal 113 and a negative terminal 114, while the case body 111 has a bipolar terminal 115 on its bottom side.

The two secondary battery cells 12 and 13 forming the first battery 2, as well as the two secondary battery cells 14 and 15 forming the second battery 3, each have two electrodes 21, i.e. a positive electrode (cathode) "C" and a negative electrode (anode) "A" arranged within the closed container 20. The secondary battery cell 16 forming the third battery 4 has three electrodes 21 arranged within the closed container 20. The three electrodes 21 include a positive electrode "C" a negative electrode "A" as well as a bipolar electrode (Biode) "B" located between the positive electrode C and the negative electrode A.

The first battery 2 is formed by the secondary battery cells 12 and 13 connected in series. The external terminal 24 of the negative electrode A of the secondary battery cell 12 is electrically connected to that of the positive electrode C of the secondary battery cell 13 by a connection line 241. The external terminal 24 of the positive electrode C of the secondary battery cell 12 is electrically connected to the positive terminal 113 by a connection line 242. In the present embodiment, the external terminal 24 of the positive electrode C of the secondary battery cell 12 and the external terminal 24 of the negative electrode A of the secondary battery cell 13 correspond to the positive terminal and the negative terminal of the first battery 2, respectively.

The second battery 3 is formed by the secondary battery cells 14 and 15 connected in series. The external terminal 24 of the negative electrode A of the secondary battery cell 14 is electrically connected to that of the positive electrode C of the secondary battery cell 15 by a connection line 243. The external terminal 24 of the negative electrode A of the secondary battery cell 15 is electrically connected to the negative terminal 114 by a connection line 244. In the present embodiment, the external terminal 24 of the positive electrode C of the secondary battery cell 14 and the external terminal 24 of the negative electrode A of the secondary battery cell 15 correspond to the positive terminal and the negative terminal of the second battery 3, respectively.

The third battery 4 is serially connected to each of the first and second batteries 2 and 3. Specifically, the external terminal 24 of the negative electrode A of the secondary battery cell 13 is electrically connected to that of the positive electrode C of the secondary battery cell 16 by a connection line 245, while the external terminal 24 of the positive electrode C of the secondary battery cell 14 is electrically connected to that of the negative electrode A of the secondary battery cell 16 by a connection line 246. The external terminal of the bipolar electrode B of the secondary battery cell 16 is electrically connected to the bipolar terminal 115 by a connection line 247. In the present embodiment, the external terminals 24 connected to the positive electrode C, negative electrode A and bipolar electrode B correspond to the positive terminal, negative terminal and bipolar terminal of the third battery 4, respectively. The connection members 25 which connect the positive electrode C, negative electrode A and bipolar electrode B to the corresponding external terminals 24 respectively correspond to the positive-electrode connection member, negative-electrode connection member and bipolar-electrode connection member. The connection lines 245 and 246 respectively correspond to the first connector and the second connector.

The electrodes 21 (positive electrodes C, bipolar electrode B and negative electrodes A) each include a current collector and an active-material layer formed on the surface of the current collector. The active-material layer is made of an active material and an adhesive for adhering the active material to the current collector. As for the active materials contained in the positive electrode C and the negative electrode A, active materials commonly used for the positive and negative electrodes in secondary batteries can be used. The active material contained in the active-material layer of the bipolar electrode B is not limited to any specific material and may be any material which gives the bipolar electrode B an electrode potential between the electrode potential of the positive electrode C and that of the negative electrode A.

For example, the active-material layer of the positive electrode C should preferably contain an active material whose electrode potential changes within a range from 2 V (vs. Li/Li⁺) to 5 V (vs. Li/Li⁺), while the active-material layer of the negative electrode A should preferably contain an active material whose electrode potential changes within a range from 0 V (vs. Li/Li⁺) to 2 V (vs. Li/Li⁺). The active-material layer of the bipolar electrode B should preferably contain an active material whose electrode potential changes within a range from 1 V (vs. Li/Li⁺) to 4 V (vs. Li/Li⁺).

As for the electrolyte 23, an appropriate kind of electrolyte compatible with the **active materials** of the electrodes may be used. It may be an aqueous or non-aqueous electrolyte. It may be an electrolytic solution, polyelectrolyte gel or solid polyelectrolyte.

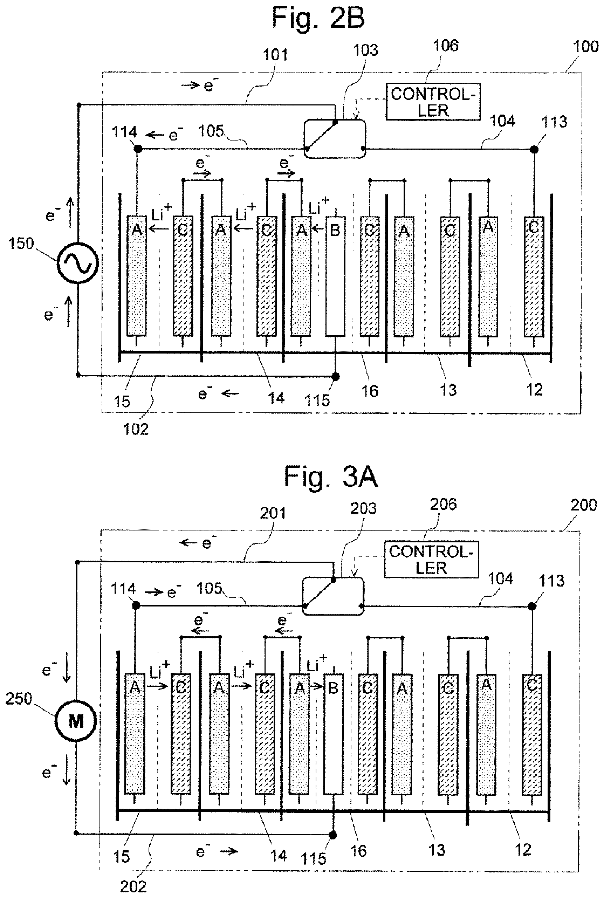

An operation principle of the secondary battery pack 1 is hereinafter described with reference to Figs. 2A and 2B. Figs. 2A and 2B show the movement of cations in the charging process under the condition that the negative electrodes A in the secondary battery cells 12-16 are made of a carbon-based material, the positive electrodes C are made of LiFePO₄, and the bipolar electrode B is made of Li_{4/3}Ti_{5/3}O₄.

The description is initially concerned with the charging operation for the secondary battery pack 1. A charger 100 for the secondary battery pack 100 includes a pair of input lines 101 and 102, a single-pole double-throw switching circuit 103 connected to an end of the input line 101, two branch lines 104 and 105 connected to the switching circuit 103, as well as a controller 106 configured to control the operation of the switching circuit 103. The switching circuit 103 switches between the state in which the input line 101 is connected to one branch line 104 (first state) and the state in which the input line 101 is connected to the other branch line 105 (second state). The switching circuit 103 corresponds to the switching means in the present invention. Various kinds of elements are available for this circuit, such as a bipolar transistor or relay.

When the secondary battery pack 1 is charged, the secondary battery pack 1 is set in the charger 100. The positive and negative terminals 113 and 114 of the secondary battery pack 1 are thereby connected to the branch lines 104 and 105 of the charger 100, respectively, while the bipolar terminal 115 is connected to the input line 102. Meanwhile, the input lines 101 and 102 of the charger 100 are connected to a pair of output ends of an AC power supply 150. In such a charging circuit, when the electrons flow through the input lines 101 and 102 in the direction as indicated by the arrows in Fig. 2A, the controller 106 switches the switching circuit 103 to the first state in which the input line 101 is connected to the branch line 104. In this state, cations (positive ions, Li⁺) move from the positive electrode C toward the negative electrode A across the electrolyte 23 in each of the secondary battery cells 12 and 13, while cations (positive ions, Li⁺) move from the positive electrode C toward the bipolar electrode B across the electrolyte 23 in the secondary battery cell 16.

When the electrons flow through the input lines 101 and 102 in the direction as indicated by the arrows in Fig. 2B, the controller 106 switches the switching circuit 103 to the second state in which the input line 101 is connected to the branch line 105. In this state, cations move from the bipolar electrode B toward the negative electrode A across the electrolyte 23 in the secondary battery cell 16, while cations move from the positive electrode C toward the negative electrode A across the electrolyte 23 in each of the secondary battery cells 14 and 15. As a result, C₆Li deposits on the negative electrode A.

Thus, the secondary battery pack 1 is charged by the two-stage chemical reactions. Accordingly, the charging can be continued by switching the switching circuit 103 to the first connection state or the second connection state every time the direction of the alternating current from the AC power supply 150 changes its direction.

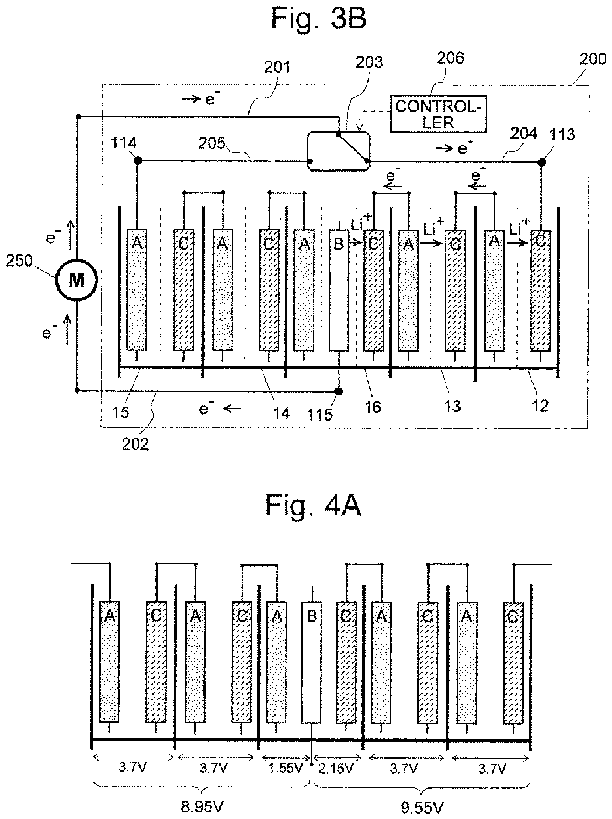

A discharging operation for the secondary battery pack 1 is hereinafter described with reference to Figs. 3A and 3B. A discharger 200 for the secondary battery pack 1 includes a pair of output lines 201 and 202, a single-pole double-throw switching circuit 203 connected to an end of the output line 201, two branch lines 204 and 205 connected to the switching circuit 203, as well as a controller 206 configured to control the operation of the switching circuit 203. The switching circuit 203 switches between the state in which the output line 201 is connected to one branch line 204 (third state) and the state in which the output line 201 is connected to the other branch line 205 (fourth state).

When the secondary battery pack 1 is discharged, the secondary battery pack 1 is set in the discharger 200. The positive and negative terminals 113 and 114 of the secondary battery pack 1 are thereby connected to the branch lines 204 and 205 of the discharger 200, respectively, while the bipolar terminal 115 is connected to the output line 202. Meanwhile, the output lines 201 and 202 of the discharger 200 are connected to a pair of input ends of a load 250. In such a discharging circuit, the controller 206 switches the switching circuit 203 to the fourth state in which the output line 201 is connected to the branch 205 (see Fig. 3A). Then, the active material on the negative electrode A is dissolved in each of the secondary battery cells 14 and 15. The resulting cations (positive ions, Li⁺) move toward the positive electrode C across the electrolyte 23. Meanwhile, the active material on the negative electrode A in the secondary battery cell 16 is dissolved, and the resulting cations (positive ions, Li⁺) move toward the bipolar electrode B across the electrolyte 23. During this process, electrons flow from the negative electrode A of the secondary battery cell 15 toward the bipolar electrode B of the secondary battery cell 16 through the external circuit (output lines 201 and 202).

The controller 206 subsequently switches the switching circuit 203 to the third state in which the output line 201 is connected to the branch line 204 (see Fig. 3B). Then, cations move from the bipolar electrode B toward the positive electrode C across the electrode 23 in the secondary battery cell 16, and eventually deposit in the form of LiFePO₄. Meanwhile, the active material on the negative electrode A is dissolved in each of the secondary battery cells 13 and 12. The resulting cations (positive ions, Li⁺) move toward the positive electrode C across the electrolyte 23. During this process, electrons flow from the bipolar electrode B of the secondary battery cell 16 toward the positive electrode C of the secondary battery cell 12 through the external circuit (output lines 201 and 202). Accordingly, alternating current can be released by operating the switching circuit 203 so that the electrode to be connected to the bipolar electrode B of the secondary battery cell 16 is alternately changed between the negative electrode A of the secondary battery cell 15 and the positive electrode C of the secondary battery cell 12 at an appropriate timing (e.g. according to the frequency of the load 250).

As can be understood from the comparison of Figs. 2A and 2B with Figs. 3A and 3B, the relationship of the input lines 101, 102, switching circuit 103 and secondary battery pack 1 in the charging process is basically the same as that of the output lines 201, 202, switching circuit 203 and secondary battery pack 1 in the discharging process. Accordingly, it is possible to make the charger 100 or discharger 200 be a charging-and-discharger having both the charging and discharging functions by appropriately controlling the timing to switch the switching circuit.

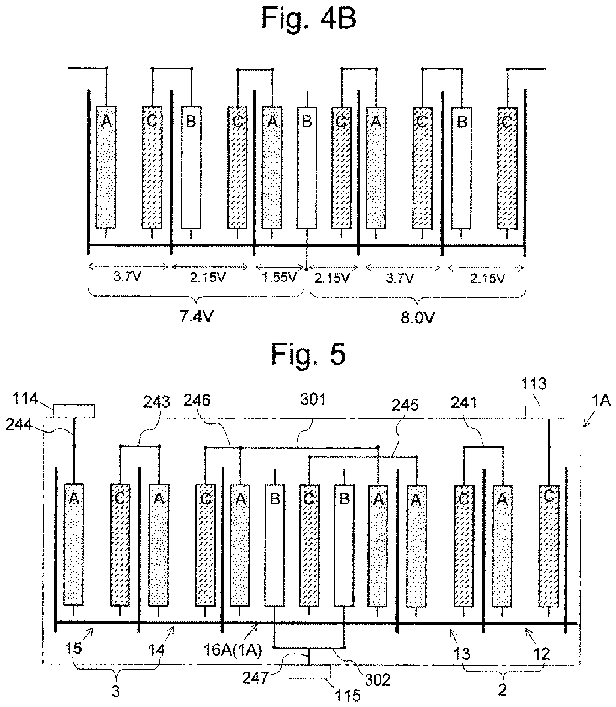

In the secondary battery pack 1 having the previously described configuration, the voltage value of the entire secondary battery pack 1 is determined by the voltage difference between the positive electrode C and the negative electrode A in the secondary battery cells 12-15, voltage difference between the positive electrode C and the bipolar electrode B in the secondary battery cell 16, as well as voltage difference between the bipolar electrode B and the negative electrode A in the secondary battery cell 16. Fig. 4A shows an example of the voltage values in the case where the positive electrodes C made of the same electrode material and the negative electrodes A made of the same electrode material are used in all secondary battery cells 12-16. On the other hand, Fig. 4B show an example of the voltage values in the case where the negative electrode of the secondary battery cell 12 and that of the secondary battery cell 14 are each made of the same electrode material as the bipolar electrode B of the secondary battery cell 16. Those examples demonstrate that secondary battery packs 1 with various voltage values can be obtained by appropriately selecting the electrode materials.

### [Second Embodiment]

Fig. 5 is a schematic configuration diagram of a secondary battery pack 1A according to the second embodiment of the present invention. In Fig. 5, the outer shape of the secondary battery pack 1A is shown by the long dashed short dashed line. The portions which are identical or correspond to those of the secondary battery pack 1 according to the first embodiment are denoted by the same reference signs. A difference of this secondary battery pack 1A from the secondary battery pack 1 exists in the configuration of the third battery 4A. Specifically, the third battery 4A is formed by a secondary battery cell 16A having five electrodes 21 arranged within the closed container 20. The five electrodes include two negative electrodes A at both extremities, one positive electrode C located between the two negative electrodes A, and two bipolar electrodes B respectively located in the two spaces formed between the two negative electrodes A and the positive electrode C.

The two negative electrodes A are electrically connected to each other by a connection line 301. This connection line 301 is electrically connected to the positive electrode C of the secondary battery cell 14 by a connection line 246. The two bipolar electrodes B are electrically connected to each other by a connection line 302. This connection line 302 is electrically connected to the bipolar terminal 115 by a connection line 247.

The secondary battery pack 1A having the previously described configuration also allows for the charge and discharge of alternating current, as with the secondary battery pack 1.

### [Third Embodiment]

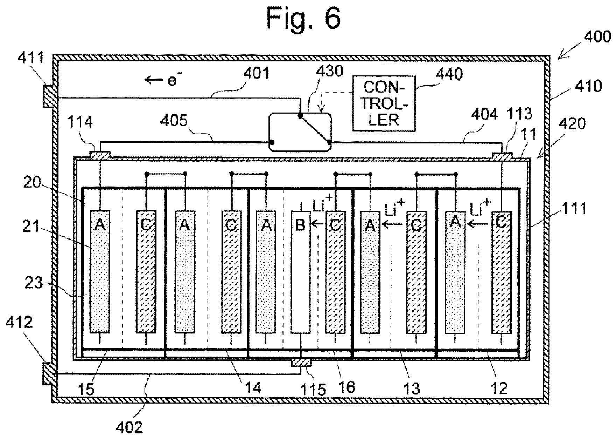

Fig. 6 shows one embodiment of the secondary battery module according to the present invention. This secondary battery module 400 includes a case 410 having a pair of terminals 411 and 412, a secondary battery pack 420 contained in the case 410, a switching circuit 430 functioning as the switching means, and a controller 440 configured to control the switching circuit 430. The secondary battery pack 420 has almost the same configuration as the previously described secondary battery pack 1 according to the first embodiment. Therefore, the portions which are identical or correspond to those of the secondary battery pack 1 are denoted by the same reference signs, and detailed descriptions of the secondary battery pack 420 will be omitted.

The terminal 411 of the secondary battery module 400 is connected to the switching circuit 430 by a first input/output line 401. The terminal 412 of the secondary battery module 400 is connected to the bipolar terminal 115 of the secondary battery pack 420 by a second input/output line 402. One of the two contacts of the switching circuit 430 is connected to the positive terminal 113 of the secondary battery pack 420 by a first line 404, while the other contact is connected to the negative terminal 114 by a second line 405.

In the secondary battery module 400, when the pair of terminals 411 and 412 are connected to a pair of output ends of an AC power supply, a charging circuit for the secondary battery pack 420 is formed, and the secondary battery pack 420 is thereby charged. The direction of the flow of the electrons and the timing to switch the switching circuit 430 in this charging process are the same as in the charging operation performed by the charger 100 when the secondary battery pack 1 according to the first embodiment is set in the charger 100.

When the pair of terminals 411 and 412 of the secondary battery module 400 are connected to a pair of input ends of a load, a discharging circuit for the secondary battery pack 420 is formed, and alternating current is supplied from the secondary battery pack 420 to the load. The direction of the flow of the electrons and the timing to switch the switching circuit 430 in this discharging process are the same as in the charging operation performed by the discharger 200 in which when the secondary battery pack 1 according to the first embodiment is set in the discharger 200.

### [Fourth Embodiment]

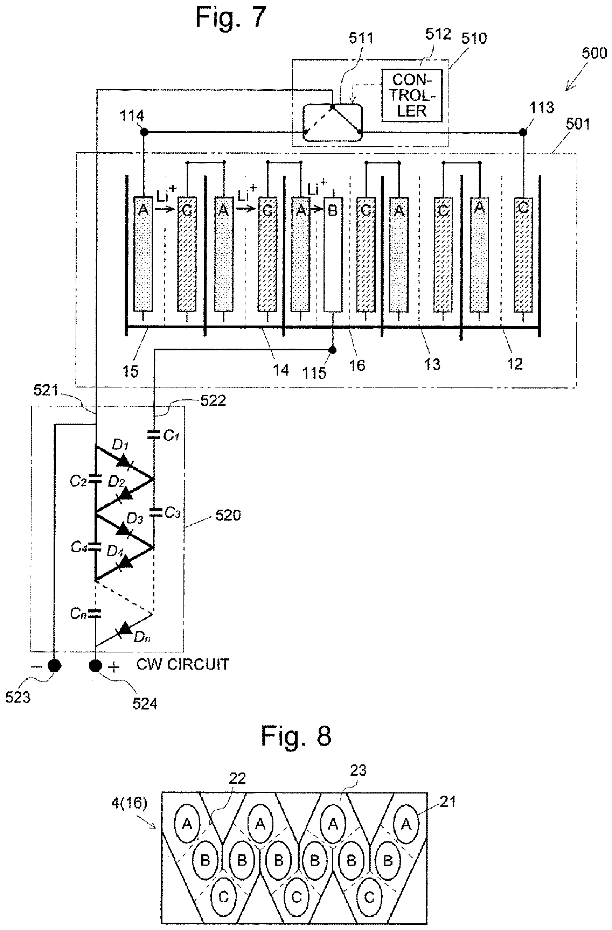

Fig. 7 is an embodiment of a high-voltage generator using a secondary battery pack according to the present invention. This high-voltage generator 500 includes a secondary battery pack 501, a switching unit 510, and a high-voltage generation unit 520 including a multistage rectification capacitor circuit. The secondary battery pack 501 has the same configuration as the secondary battery pack 1 according to the first embodiment. Therefore, the portions which are identical or correspond to those of the secondary battery pack 1 are denoted by the same reference signs, and detailed descriptions of the secondary battery pack 501 will be omitted.

The switching unit 510 includes a single-pole double-throw switching circuit 511 and a controller 512 configured to control the operation of the switching circuit 511. The two contacts of the switching circuit 511 are respectively connected to the positive terminal 113 and the negative terminal 114 of the secondary battery pack 501 in a removable manner.

The high-voltage generator 520 includes a Cockcroft-Walton (CW) circuit having a plurality of serially connected diodes D₁ to Dₙ and capacitors C₁ to Cₙ forming a multistage circuit. The CW circuit has a pair of input terminals 521 and 522, to which the switching circuit 511 of the switching unit 510 and the bipolar terminal 515 of the secondary battery pack 501 are respectively connected. The connection between the input terminal 522 of the CW circuit and the bipolar terminal 115 of the secondary battery pack 501 is removable. The pair of output terminals 523 and 524 of the CW circuit serve as the output terminals of the high-voltage generator 500.

When a pair of input terminals of a load (not shown) is connected to the output terminals 523 and 524 of the high-voltage generator 500, the controller 512 operates the switching circuit 511 so that the circuit is alternately switched between the first state indicated by the solid line in Fig. 7 (i.e. the state in which the CW circuit is connected between the positive terminal 113 and the bipolar terminal 115) and the second state indicated by the dashed line (i.e. the state in which the CW circuit is connected between the negative terminal 114 and the bipolar terminal 115). As a result, AC power is supplied from the secondary battery pack 501 to the high-voltage generation unit 520, which produces a high-voltage DC-power output to the load connected to the output terminals 523 and 524 of the CW circuit. It is possible to configure the controller 512 so that it disconnects the two contacts from both the positive terminal 113 and the negative terminal 114 upon detecting that all capacitors of the CW circuit have been fully charged.

When the amount of charges stored in the secondary battery pack 501 has been decreased to a certain level, the secondary battery pack 501 can be removed from the high-voltage generator 500 and set in a charger. For example, the previously described charger 100 (see Fig. 2A) can be used for this purpose. The operation for charging the secondary battery pack 501 is the same as the charging operation for the secondary battery pack 1 using the charger 100, and therefore, will not be described in this embodiment.

### [Modified Examples]

The previously described embodiments are mere examples and can be appropriately changed or modified along with the gist of the present invention.

In the first to fourth embodiments, the plurality of electrodes included in the third battery in the secondary battery pack are horizontally arranged in a row (see Figs. 1 and 5). If there are a considerable number of electrodes, those electrodes may be arranged in a V-shaped, U-shaped or zigzag form. Fig. 8 shows an example in which 13 electrodes are arranged in a zigzag form. Such an arrangement makes the positive electrodes C be closer to each other, the bipolar electrodes B be closer to each other, and the negative electrodes C be closer to each other in the third battery, thereby reducing the connection distance between the positive electrodes C, between the bipolar electrodes B as well as between the negative electrodes A.

In the first to fourth embodiments, the five secondary battery cells 12-16 forming the secondary battery pack are horizontally arranged in a row. Those secondary battery cells 12-16 may be arranged in any way as long as their electrical connection is the same.

In the first to fourth embodiments, a plurality of secondary battery cells is connected in series to construct the first and second batteries. It is also possible that one or both first and second batteries include a plurality of secondary battery cells connected in parallel.

In the first embodiment, the secondary battery pack 1 is separated from the charger 100 or discharger 200. The secondary battery pack 1 and a charging-and-discharging circuit may be contained in one case to form a secondary battery module.

The secondary battery pack included in the secondary battery module according to the third embodiment, as well as the secondary battery pack included in the high-voltage generator according to the fourth embodiment, may be configured in the same manner as the secondary battery pack shown in Fig. 5.

### REFERENCE SIGNS LIST

1, 1A, 420, 501 ... Secondary Battery Pack
2 ... First Battery
3 ... Second Battery
4, 4A ... Third Battery
100 ... Charger
101, 102 ... Input Line
103 ... Switching Circuit
104, 105 ... Branch Line
106 ... Controller
11 ... Case
111 ... Case Body
112 ... Cover
113 ... Positive Terminal
114 ... Negative Terminal
115 ... Bipolar Terminal
12-16, 16A ... Secondary Battery Cell
20 ... Closed Container
200 ... Discharger
201 ... Output Line
202 ... Output Line
203 ... Switching Circuit
204, 205 ... Branch Line
206 ... Controller
21 ... Electrode
22 ... Separator
23 ... Electrolyte
24 ... External Terminal
25 ... Connection Member
241-247, 301, 302 ... Connection Line
150 ... AC Power Supply
250 ... Load
400 ... Secondary Battery Module
500 ... High-Voltage Generator

## Claims

1. A secondary battery pack comprising:
a first battery and a second battery each of which includes a positive terminal and a negative terminal;
a third battery including a positive terminal, a negative terminal and a bipolar terminal;
a first connector configured to electrically connect the negative terminal of the first battery and the positive terminal of the third battery; and
a second connector configured to electrically connect the positive terminal of the second battery and the negative terminal of the third battery,
where the third battery includes the following elements, with n being an integer equal to or greater than zero:
(n+1) positive electrodes and (n+1) negative electrodes alternately arranged;
(2n+1) bipolar electrodes individually located in spaces between the positive electrodes and the negative electrodes neighboring each other;
an electrolyte;
a positive-electrode connection member configured to electrically connect the positive terminal of the third battery and the (n+1) positive electrodes;
a negative-electrode connection member configured to electrically connect the negative terminal and the (n+1) negative electrodes; and
a bipolar-electrode connection member configured to electrically connect the bipolar terminal and each of the (2n+1) bipolar electrodes.

2. A secondary battery pack comprising:
a first battery and a second battery each of which includes a positive terminal and a negative terminal;
a third battery including a positive terminal, a negative terminal and a bipolar terminal;
a first connector configured to electrically connect the negative terminal of the first battery and the positive terminal of the third battery; and
a second connector configured to electrically connect the positive terminal of the second battery and the negative terminal of the third battery,
where the third battery includes the following elements, with n being an integer equal to or greater than zero:
either (n+2) positive electrodes and (n+1) negative electrodes alternately arranged, or (n+2) negative electrodes and (n+1) positive electrodes alternately arranged;
(2n+2) bipolar electrodes individually located in spaces between the positive electrodes and the negative electrodes neighboring each other;
an electrolyte;
a positive-electrode connection member configured to electrically connect the positive terminal of the third battery and the (n+2) or (n+1) positive electrodes;
a negative-electrode connection member configured to electrically connect the negative terminal and the (n+1) or (n+2) negative electrodes; and
a bipolar-electrode connection member configured to electrically connect the bipolar terminal and the (2n+2) bipolar electrodes.

3. The secondary battery pack according to claim 1 or 2, wherein at least one of the first battery and the second battery includes a plurality of secondary battery cells connected in series or in parallel.

4. A secondary battery module including the secondary battery pack according to one of claims 1-3, the secondary battery module comprising:
a first input/output line;
a switching means configured to switch between a first state in which the first input/output line is electrically connected to the positive terminal of the secondary battery pack and a second state in which the first input/output line is electrically connected to the negative terminal of the second battery of the secondary battery pack;
a second input/output line electrically connected to the bipolar terminal of the third battery of the secondary battery pack; and
a controller configured to control the switching means.

## Patentansprüche

1. Sekundärbatteriepack, umfassend:
eine erste Batterie und eine zweite Batterie, die jeweils eine positive Klemme und eine negative Klemme beinhalten;
eine dritte Batterie, die eine positive Klemme, eine negative Klemme und eine bipolare Klemme beinhaltet;
einen ersten Verbinder, der konfiguriert ist, um die negative Klemme der ersten Batterie und die positive Klemme der dritten Batterie elektrisch zu verbinden; und
einen zweiten Verbinder, der konfiguriert ist, um die positive Klemme der zweiten Batterie und die negative Klemme der dritten Batterie elektrisch zu verbinden,
wobei die dritte Batterie die folgenden Elemente beinhaltet, wobei n eine ganze Zahl gleich oder größer als Null ist:
(n+1) positive Elektroden und (n+1) negative Elektroden, die abwechselnd angeordnet sind;
(2n+1) bipolare Elektroden, die einzeln in Räumen zwischen den positiven Elektroden und den negativen Elektroden, die zueinander benachbart sind, angebracht sind;
einen Elektrolyten;
ein Verbindungselement für positive Elektroden, das konfiguriert ist, um die positive Klemme der dritten Batterie und die (n+1) positiven Elektroden elektrisch zu verbinden;
ein Verbindungselement für negative Elektroden, das konfiguriert ist, um die negative Klemme und die (n+1) negativen Elektroden elektrisch zu verbinden;
ein Verbindungselement für bipolare Elektroden, das konfiguriert ist, um die bipolare Klemme und jede der (2n+1) bipolaren Elektroden elektrisch zu verbinden.

2. Sekundärbatteriepack, umfassend:
eine erste Batterie und eine zweite Batterie, die jeweils eine positive Klemme und eine negative Klemme beinhalten;
eine dritte Batterie, die eine positive Klemme, eine negative Klemme und eine bipolare Klemme beinhaltet;
einen ersten Verbinder, der konfiguriert ist, um die negative Klemme der ersten Batterie und die positive Klemme der dritten Batterie elektrisch zu verbinden; und
einen zweiten Verbinder, der konfiguriert ist, um die positive Klemme der zweiten Batterie und die negative Klemme der dritten Batterie elektrisch zu verbinden,
wobei die dritte Batterie die folgenden Elemente beinhaltet, wobei n eine ganze Zahl gleich oder größer als Null ist:
entweder (n+2) positive Elektroden und (n+1) negative Elektroden, die abwechselnd angeordnet sind, oder (n+2) negative Elektroden und (n+1) positive Elektroden, die abwechselnd angeordnet sind;
(2n+2) bipolare Elektroden, die einzeln in Räumen zwischen den positiven Elektroden und den negativen Elektroden, die zueinander benachbart sind, angebracht sind;
einen Elektrolyten;
ein Verbindungselement für positive Elektroden, das konfiguriert ist, um die positive Klemme der dritten Batterie und die (n+2) oder (n+1) positiven Elektroden elektrisch zu verbinden;
ein Verbindungselement für negative Elektroden, das konfiguriert ist, um die negative Klemme und die (n+1) oder (n+2) negativen Elektroden elektrisch zu verbinden;
ein Verbindungselement für bipolare Elektroden, das konfiguriert ist, um die bipolare Klemme und die (2n+2) bipolaren Elektroden elektrisch zu verbinden.

3. Sekundärbatteriepack nach Anspruch 1 oder 2, wobei mindestens eine der ersten Batterie und der zweiten Batterie eine Vielzahl von Sekundärbatteriezellen beinhaltet, die in Reihe oder parallel geschaltet sind.

4. Sekundärbatteriemodul, das den Sekundärbatteriepack nach einem der Ansprüche 1 bis 3 beinhaltet, wobei das Sekundärbatteriemodul umfasst:
eine erste Eingangs-/Ausgangsleitung;
eine Schaltelement, das konfiguriert ist zum Umschalten zwischen einem ersten Zustand, in dem die erste Eingangs-/Ausgangsleitung mit der positiven Klemme des Sekundärbatteriepacks elektrisch verbunden ist, und einem zweiten Zustand, in dem die erste Eingangs-/Ausgangsleitung mit der negativen Klemme der zweiten Batterie des Sekundärbatteriepacks elektrisch verbunden ist;
eine zweite Eingangs-/Ausgangsleitung, die mit der bipolaren Klemme der dritten Batterie des Sekundärbatteriepacks elektrisch verbunden ist; und
eine Steuereinheit, die konfiguriert ist zum Steuern des Schaltelements.

## Revendications

1. Bloc-batterie secondaire comprenant :
une première batterie et une deuxième batterie dont chacune comprend une borne positive et une borne négative ;
une troisième batterie comprenant une borne positive, une borne négative et une borne bipolaire ;
un premier connecteur configuré pour relier électriquement la borne négative de la première batterie et la borne positive de la troisième batterie ; et
un second connecteur configuré pour relier électriquement la borne positive de la deuxième batterie et la borne négative de la troisième batterie,
où la troisième batterie comprend les éléments suivants, n étant un nombre entier supérieur ou égal à zéro :
(n+1) électrodes positives et (n+1) électrodes négatives agencées en alternance ;
(2n+1) électrodes bipolaires situées individuellement dans des espaces entre les électrodes positives et les électrodes négatives voisines ;
un électrolyte ;
un organe de liaison d'électrode positive configuré pour relier électriquement la borne positive de la troisième batterie et les (n+1) électrodes positives ;
un organe de liaison d'électrode négative configuré pour relier électriquement la borne négative et les (n+1) électrodes négatives ; et
un organe de liaison d'électrode bipolaire configuré pour relier électriquement la borne bipolaire et chacune des (2n+1) électrodes bipolaires.

2. Bloc-batterie secondaire comprenant :
une première batterie et une deuxième batterie dont chacune comprend une borne positive et une borne négative ;
une troisième batterie comprenant une borne positive, une borne négative et une borne bipolaire ;
un premier connecteur configuré pour relier électriquement la borne négative de la première batterie et la borne positive de la troisième batterie ; et
un second connecteur configuré pour relier électriquement la borne positive de la deuxième batterie et la borne négative de la troisième batterie,
où la troisième batterie comprend les éléments suivants, n étant un nombre entier supérieur ou égal à zéro :
soit (n+2) électrodes positives et (n+1) électrodes négatives agencées en alternance, soit (n+2) électrodes négatives et (n+1) électrodes positives agencées en alternance ;
(2n+2) électrodes bipolaires situées individuellement dans des espaces entre les électrodes positives et les électrodes négatives voisines ;
un électrolyte ;
un organe de liaison d'électrode positive configuré pour relier électriquement la borne positive de la troisième batterie et les (n+2) ou (n+1) électrodes positives ;
un organe de liaison d'électrode négative configuré pour relier électriquement la borne négative et les (n+1) ou (n+2) électrodes négatives ; et
un organe de liaison d'électrode bipolaire configuré pour relier électriquement la borne bipolaire et les (2n+2) électrodes bipolaires.

3. Bloc-batterie secondaire selon la revendication 1 ou 2, dans lequel au moins l'une de la première batterie et de la deuxième batterie comprend une pluralité d'éléments de batterie secondaire reliés en série ou en parallèle.

4. Module de batterie secondaire comprenant le bloc-batterie secondaire selon l'une des revendications 1 à 3, le module de batterie secondaire comprenant :
une première ligne d'entrée/sortie ;
un moyen de commutation configuré pour commuter entre un premier état dans lequel la première ligne d'entrée/sortie est reliée électriquement à la borne positive du bloc-batterie secondaire et un second état dans lequel la première ligne d'entrée/sortie est reliée électriquement à la borne négative de la deuxième batterie du bloc-batterie secondaire ;
une seconde ligne d'entrée/sortie reliée électriquement à la borne bipolaire de la troisième batterie du bloc-batterie secondaire ; et
un dispositif de commande configuré pour commander le moyen de commutation.
